# EUROPÄISCHE PATENTANMELDUNG

(11) **EP 0 651 175 A1**
(43) Veröffentlichungstag der Anmeldung: **03.05.1995**
(21) Anmeldenummer: 94115359.5
(22) Anmeldetag: 29.09.1994
(51) Int. Cl.: F16F 9/56, F16F 9/46, F16F 9/02, A47C 3/30, A47B 9/10

(54) **Längenverstellbare Gasfeder**

(30) Priorität: 27.10.1993 DE 4336616; 14.05.1994 DE 4417027
(71) Anmelder: SUSPA COMPART Aktiengesellschaft, D-90518 Altdorf (DE)
(72) Erfinder: Siebenhaar, Günther, D-91227 Leinburg (DE); Hein, Otmar, D-90610 Winkelhaid (DE)
(74) Vertreter: Rau, Manfred, Dr. Dipl.-Ing.

(57) **Zusammenfassung**

Eine Gasfeder (6) ist mit einer hydraulischen Verstell-Einrichtung (25) durch Verriegelungsmittel verbindbar, wobei die Verstell-Einrichtung (25) eine eigenständige Baugruppe darstellt, die eine Auslöse-Einrichtung (26) und eine hiermit über einen Hydraulik-Schlauch (28) verbundene Betätigungseinrichtung (27) aufweist.

## Beschreibung

Die Erfindung betrifft eine längenverstellbare Gasfeder nach dem Oberbegriff des Anspruches 1.

Bei einer derartigen aus der EP 0 564 776 A1 (entsprechend US Ser. No. 08/036 384 entsprechend JP Hei-5-64 105) bekannten längenverstellbaren Gasfeder ist die Auslöse-Einrichtung mit elastischen Verriegelungs-Zungen versehen, die mit der Gasfeder verrastbar sind, wobei die Verriegelungs-Zungen mit Rastvorsprüngen in eine der Gasfeder zugeordnete Hinterschneidung eingreifen. Diese Lösung wirkt zufriedenstellend, ist aber vom Fertigungsaufwand her noch relativ aufwendig.

Der Erfindung liegt daher die Aufgabe zugrunde, eine Gasfeder der gattungsgemäßen Art so auszugestalten, daß bei besonders einfacher Ausgestaltung der Auslöse-Einrichtung der Verstell-Einrichtung und bei besonders einfacher Ausgestaltung des zugeordneten Bereichs der Gasfeder die Verbindung von Auslöse-Einrichtung und Gasfeder in besonders einfacher Weise bei gleichzeitig hoher Zuverlässigkeit möglich ist.

Diese Aufgabe wird erfindungsgemäß durch die Merkmale im Kennzeichnungsteil des Anspruches 1 gelöst. Durch die erfindungsgemäßen Maßnahmen wird erreicht, daß das Gehäuse der Auslöse-Einrichtung lediglich in die Distanz-Hülse der Gasfeder gegen die Kraft des Betätigungs-Stiftes eingedrückt und um einen kleinen Winkelbetrag verdreht wird. Sie rastet dann selbsttätig ein. Ein Lösen geht in umgekehrter Richtung vor sich. Ein unbeabsichtigtes Lösen ist praktisch ausgeschlossen. Es sind auch keine von außen zugänglichen Teile vorhanden, die beschädigt oder abgebrochen werden können. Unter einem Mehrkant-Bereich ist nicht nur ein gleichmäßiges Vierkant-, Sechskant- oder Achtkant-Profil zu verstehen, sondern ein im weitesten Sinne unrundes Profil, gegebenenfalls mit Vorsprüngen, die eine Verriegelung nach einem Verdrehen ermöglichen.

Weitere vorteilhafte und zumindest teilweise erfinderische Ausgestaltungen ergeben sich aus den Unteransprüchen.

Weiterhin ergeben sich weitere Merkmale, Vorteile und Einzelheiten der Erfindung aus der Beschreibung eines Ausführungsbeispieles anhand der Zeichnung. Es zeigt
- Fig. 1: einen Büro-Stuhl in schematischer Darstellung,
- Fig. 2: eine Gasfeder mit einer Verstell-Einrichtung gemaß der Erfindung in aufgeschnittener Darstellung,
- Fig. 3: einen vergrößerten Teilschnitt aus Fig. 2,
- Fig. 4: einen Längsschnitt durch eine Distanz-Hülse,
- Fig. 5: einen Querschnitt durch die Distanz-Hülse gemäß der Schnittlinie V-V in Fig. 3,
- Fig. 6: eine Außenansicht eines Gehäuses einer Auslöse-Einrichtung,
- Fig. 7: einen Teil-Längsschnitt durch eine Gasfeder in gegenüber Fig. 3 veränderter Ausgestaltung der Gasfeder,
- Fig. 8: einen Teil-Längsschnitt durch die Gasfeder nach Fig. 7 mit einer mechanischen Auslöse-Einrichtung und
- Fig. 9: einen Teil-Längsschnitt durch eine Gasfeder in Fig. 7 in veränderter Ausgestaltung der Gasfeder.

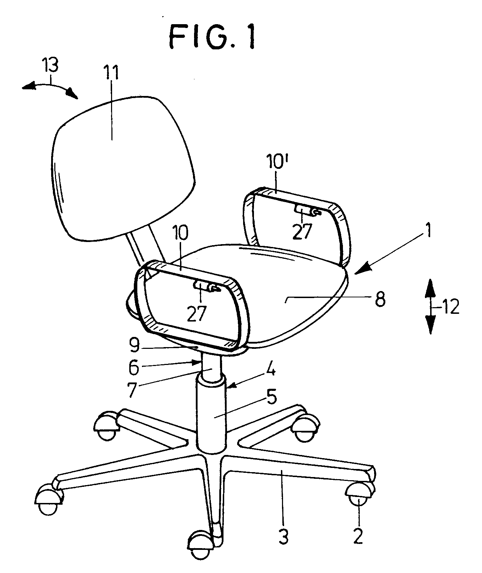

In Fig. 1 ist ein Büro-Stuhl 1 dargestellt. Dieser weist ein über Rollen 2 auf dem Boden abgestütztes Stuhlgestell 3 auf, an dem eine nach oben ragende Stuhlsäule 4 angebracht ist. Diese weist ein Führungsrohr 5 auf, in dem eine längenverstellbare Gasfeder 6 in der Weise angeordnet ist, daß ihre Kolbenstange am Boden des Führungsrohres 5 befestigt ist, während das Gehäuse 7 der Gasfeder 6 verschiebbar im Führungsrohr 5 geführt ist. Das obere Ende des Gehäuses 7 ist an einem einen Sitz 8 tragenden Sitzträger 9 des Stuhles befestigt. Der Stuhl weist Armlehnen 10, 10' und in üblicher Weise eine Rückenlehne 11 auf, die in üblicher Weise verschwenkbar ist. Der Sitzträger 9 mit dem Sitz 8 kann durch entsprechende Längenverstellung der Gasfeder 6 entsprechend dem vertikalen Höhenverstell-Pfeil 12 verstellt werden, während die Rückenlehne 11 entsprechend dem Schwenkrichtungs-Pfeil 13 verstellt werden kann. Die Art der Anordnung einer längenverstellbaren Gasfeder 6 in einem Führungsrohr 5 als höhenverstellbare Stuhlsäule ist aus der DE-PS 19 31 012 (entsprechend US-PS 3 711 054 bzw. JP-PS 892 209) allgemein bekannt und in der Praxis verbreitet. Die längenverstellbare Gasfeder 6 ist aus der DE-PS 18 12 282 (entsprechend US-PS 3 656 593 und JP-PS 846 405) bekannt und in der Praxis verbreitet.

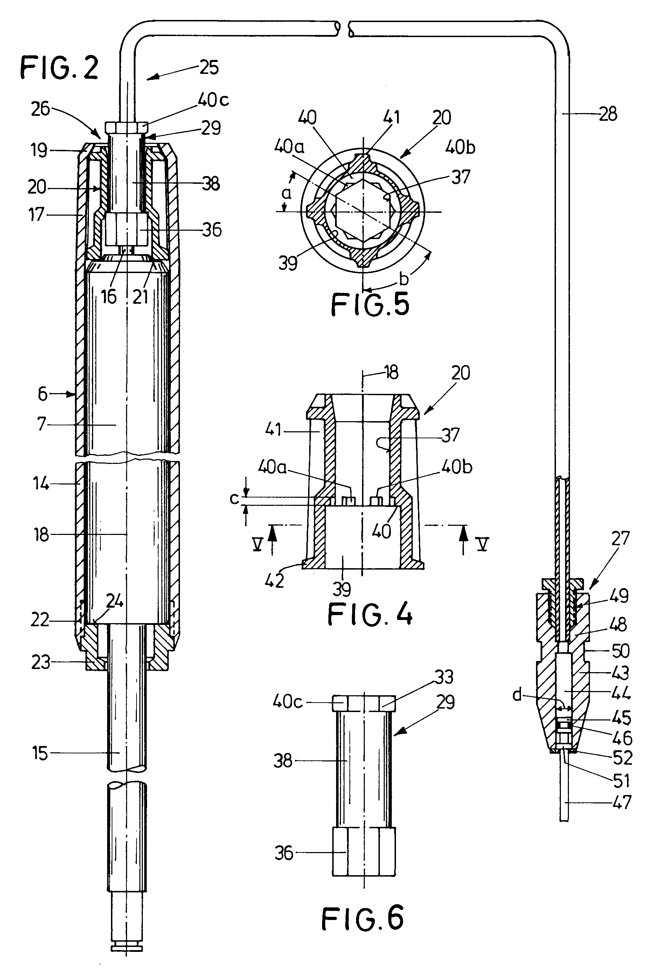

In Fig. 2 und 3 ist eine längenverstellbare Gasfeder 6 dargestellt, deren Gehäuse 7 in einem zusätzlichen, im wesentlichen zylindrischen Tragrohr 14 angeordnet ist. Aus einem Ende des Gehäuses 7 der Gasfeder 6 ist die bereits erwähnte Kolbenstange 15 herausgeführt, während aus dem dem Kolbenstangenaustritt entgegengesetzten Ende des Gehäuses 7 ein Betätigungsstift 16 zur Betätigung eines im Gehäuse 7 befindlichen Ventils herausragt, das zur Längenverstellung der Gasfeder 6 mittels des Betätigungsstiftes 16 betätigt werden muß.

An dem dem Betätigungsstift 16 benachbarten Ende des zusätzlichen Tragrohres 14 ist dieses mit einem sich konisch verjüngenden Befestigungsabschnitt 17 versehen, der im Bereich seines freien Endes einen nach innen zur Mittel-Längs-Achse 18 der Gasfeder 6 hin umgebördelten Rand 19 aufweist. Im Befestigungsabschnitt 17 ist eine Distanz-Hülse 20 angeordnet, die sich in Richtung der Achse 18 gegen den Rand 19 abstützt. Gegen diese Hülse 20 stützt sich wiederum die dem Betätigungsstift 16 benachbarte Stirnseite 21 des Gehäuses 7 der Gasfeder 6 ab.

In dem dem Kolbenstangenaustritt benachbarten Bereich des zusätzlichen Tragrohres 14 ist ein Innengewinde 22 ausgebildet, in das eine die Kolbenstange 15 umgebende Ring-Mutter 23 geschraubt ist, die gegen die dem Kolbenstangenaustritt zugeordnete Stirnseite 24 des Gehäuses 7 der Gasfeder 6 anliegt. Mittels dieser Ring-Mutter 23 wird das Gehäuse 7 der Gasfeder 6 gegen die Distanz-Hülse 20 gespannt und letztere wiederum gegen den Rand 19. Hierdurch wird das Gehäuse 7 der Gasfeder 6 im zusätzlichen Tragrohr 14 festgelegt. Insoweit als die Ausgestaltung bis jetzt beschrieben ist, ist sie aus der EP 0 133 524 B1 (entsprechend US-PS 4 979 718 und JP-PS 1 818 872) bekannt und in der Praxis eingeführt.

Es ist eine hydraulische Verstell-Einrichtung 25 vorgesehen, die aus einer hydraulischen Auslöse-Einrichtung 26, einer hydraulischen Betätigungs-Einrichtung 27 und einem diese verbindenden druckfesten, flexiblen Hydraulik-Schlauch 28 besteht.

Die Auslöse-Einrichtung 26 weist ein im wesentlichen zylindrisches Gehäuse 29 auf, in dessen zylindrischer Hydraulikkammer 30 ein Auslöse-Kolben 31 mittels einer Dichtung 32 abgedichtet verschiebbar geführt ist. Die Hydraulikkammer 30 ist zu einer Stirnseite hin durch den Auslöse-Kolben 31 abgeschlossen. An der anderen Stirnseite ist das Gehäuses 29 mit einem Anschlußstutzen 33 für den Hydraulik-Schlauch 28 versehen, in dem letzterer mittels einer Schlauch-Klemm-Kupplung 34 festgelegt ist, so daß der Schlauch 28 mit der Hydraulik-Kammer 30 verbunden ist.

Der Auslöse-Kolben 31 weist an seiner nach außen gewandten Fläche eine beispielsweise durch einen Ringbund begrenzte oder gebildete Aufnahme-Ausnehmung 35 für den Betätigungsstift 16 der Gasfeder 6 auf.

Das Gehäuse 29 der Auslöse-Einrichtung 26 weist an seinem dem Anschlußstutzen 23 entfernten Bereich, also benachbart zum Betätigungsstift 16 der Gasfeder 6, einen Außen-Sechskant-Abschnitt 36 auf, dessen Schlüsselweite dem Durchmesser eines zylindrischen Abschnittes 38 des Gehäuses 29 entspricht. Die Distanz-Hülse 20 weist konzentrisch zur Achse 18 einen Innen-Sechskant-Bereich 37 auf, der so ausgebildet ist, daß der Außen-Sechskant-Abschnitt 36 des Gehäuses 29 leicht aber im wesentlichen spielfrei in die Distanz-Hülse 20 eingeschoben werden kann. Der zylindrische Abschnitt 38 des Gehäuses 29 liegt dadurch ebenfalls - radial zur Achse 18 - im wesentlichen spielfrei in dem Innen-Sechskant-Bereich 37 der Distanz-Hülse 20.

Die Distanz-Hülse 20 weist im Anschluß an den hohlen Innen-Sechskant-Bereich 37 zur Gasfeder 6 hin eine gegenüber dem Bereich 37 erweiterte zur Achse 18 konzentrische zylindrische Ausnehmung 39 auf. Am Übergang vom Bereich 37 zur Ausnehmung 39 ist eine Anschlagfläche 40 ausgebildet. In dieser Anschlagfläche 40 sind Ausnehmungen 40a ausgebildet, die ein Sechskantprofil begrenzen, das dem des Innen-Sechskant-Bereiches 37 entspricht, gegenüber diesem aber um einen Winkel a von 30° um die Achse 18 versetzt angeordnet sind, wie insbesondere Fig. 4 entnehmbar ist. Der Winkel a ist gleich dem halben Winkel b von 60° des Innen-Sechskant-Bereiches 37.

Die Distanz-Hülse 20 ist an ihrer Außenseite mit Rippen 41 versehen, die sich gegen die Innenseite des Befestigungsabschnittes 17 abstützen. An ihrem dem Gehäuse 7 der Gasfeder 6 zugewandten Ende ist sie mit einem Anschlag 42 zur Anlage an der Stirnseite 21 des Gehäuses 7 ausgebildet. Sie besteht aus Kunststoff oder einem Zink- oder Aluminium-Druckguß. Grundsätzlich besteht sie aus weicherem Material als das aus Stahl bestehende Gehäuse 7 der Gasfeder 6 bzw. als das ebenfalls aus Stahl bestehende Tragrohr 14.

Die Betätigungs-Einrichtung 27 weist ebenfalls ein im wesentlichen zylindrisches Gehäuse 43 auf, in dem eine zylindrische Hydraulikkammer 44 ausgebildet ist, in der ein Betätigungskolben 45 mittels einer Dichtung 46 abgedichtet verschiebbar ist. Einstückig mit dem Betätigungskolben 45 ist ein Bedienungsstift 47 ausgebildet, der aus einem Ende des Gehäuses 43 herausgeführt ist. Am anderen Ende des Gehäuses 43 ist ein Anschlußstutzen 48 vorgesehen, in dem der Hydraulik-Schlauch 28 mittels einer Schlauch-Klemm-Kupplung 49 festgelegt ist. Diese Kupplung 49 ist als Schraub-Kupplung ausgebildet und daher zerstörungsfrei lösbar. Auf der Außenseite des Gehäuses 43 ist eine Ringnut 50 ausgebildet, mittels der die Betätigungs-Einrichtung 27 beispielsweise an der Armlehne 10 des Stuhles 1 befestigt werden kann. Der Hydraulik-Schlauch 28 wird hierbei beispielsweise durch die Armlehne 10 zum Sitzträger geführt.

Die Hydraulikkammer 30, der Hydraulik-Schlauch 28 und die Hydraulikkammer 44 sind mit inkompressibler Flüssigkeit gefüllt. Bei einem Druck von außen auf den Bedienungsstift 47 der Betätigungs-Einrichtung 27 in deren Gehäuse 43 hinein, wird demzufolge der Auslöse-Kolben 31 von dem Anschlußstutzen 33 des Gehäuses 29 weggeschoben und drückt den Betätigungsstift 16 der Gasfeder 6 in deren Gehäuse 7 hinein, wodurch das im Gehäuse 7 befindliche Ventil geöffnet wird. Die Gasfeder 6 kann dann durch Ausfahren ihrer Kolbenstange 15 aus dem Gehäuse 7 oder durch Hineindrücken der Kolbenstange 15 in das Gehäuse 7 hinein in ihrer Länge verstellt werden. Beim Loslassen des Bedienungsstiftes 47 drückt der in der Gasfeder 6 befindliche Gasdruck den Betätigungsstift 16 wieder aus dieser hinaus und schiebt demzufolge den Auslöse-Kolben 31 in Richtung auf den Anschlußstutzen 33 des Gehäuses 29. Die aus der Hydraulikkammer 30 verdrängte Flüssigkeit fließt durch den Hydraulik-Schlauch 28 in die Hydraulikkammer 44 und schiebt den Betätigungs-Kolben 45 mit dem Bedienungsstift 47 wieder in die Ausgangslage zurück.

Damit der Betätigungs-Kolben 45 mit Bedienungsstift 47 nicht unabsichtlich aus dem Gehäuse 43 entfernt werden kann, ist er mit einem Ringbund 51 versehen, der gegen einen äußeren Anschlagrand 52 des Gehäuses 43 zur Anlage kommt. Die Verstell-Einrichtung 25 ist daher in betriebsfertigem Zustand ein eigenständiges, lagerfähiges, versandfähiges und einbaufähiges Bauteil.

Zur Verbindung der Verstell-Einrichtung 25 mit der im Tragrohr 14 bereits angeordneten Gasfeder 6 wird die Auslöse-Einrichtung 26, und zwar deren Außen-Sechskant-Abschnitt 36, in den Innen-Sechskant-Bereich 37 der Distanz-Hülse 20 eingeschoben, bis der Betätigungsstift 16 in der Ausnehmung 35 des Auslöse-Kolbens 31 gegen diesen anliegt. Das Gehäuse 29 wird dann weiter in die Distanz-Hülse 20 eingedrückt, bis der Außen-Sechskant-Abschnitt 36 aus dem Innen-Sechskant-Bereich 37 austritt. Der Betätigungsstift 16 ist hierbei zumindest teilweise in das Gehäuse 7 der Gasfeder 6 hineingedrückt worden. Nunmehr wird das Gehäuse 29 der Auslöse-Einrichtung 26 um den Winkel a von 30° verdreht, so daß der Außen-Sechskant-Abschnitt 36 in Überdeckung mit den Ausnehmungen 40a in der Anschlagfläche 40 kommt. Wenn nunmehr das Gehäuse 29 losgelassen wird, wird es von dem Betätigungsstift 16 so weit wieder aus der Distanz-Hülse 20 herausgeschoben, bis der Außen-Sechskant-Abschnitt 36 am Grund 40b der Ausnehmungen 40a anliegt. Die Ausnehmungen 40a haben parallel zur Achse 18 eine Tiefe c, die nur so groß ist, daß der Außen-Sechskant-Abschnitt 36 vom Betätigungsstift 16 der Gasfeder 6 gegen den Grund 40b der Ausnehmungen 40a gedrückt wird. Die Auslöse-Einrichtung 26 ist also auch in Richtung der Achse 18 im wesentlichen spielfrei in der Distanz-Hülse 20 festgelegt. Ein unabsichtliches Lösen ist ausgeschlossen.

Das Gehäuse 29 kann an seinem Anschlußstutzen 33 ebenfalls mit einem Sechskant-Profil 40c versehen sein, wodurch die Montage bzw. Demontage der Auslöse-Einrichtung 26 erleichtert werden kann.

Die Auslöse-Einrichtung 26 und die Betätigungs-Einrichtung 27 bestehen aus geeignetem Kunststoff oder Aluminium.

Durch entsprechende Abstimmung der Durchmesser des Auslöse-Kolbens 31 einerseits und des Betätigungs-Kolbens 45 andererseits, kann der Verstell-Einrichtung 25 eine Übersetzung oder eine Untersetzung gegeben werden. Wie Fig. 2 und 3 entnehmbar ist, ist der Durchmesser D des Auslöse-Kolbens 31 etwa doppelt so groß wie der Durchmesser d des Betätigungskolbens 45. Dies hat für den konkreten Fall zur Folge, daß die vom Benutzer am Bedienungsstift 47 zur Verstellung aufzubringende Kraft nur etwa ein Viertel von der Kraft beträgt, die zum Einschieben des Betätigungsstiftes 16 in die Gasfeder 6 aufzubringen ist.

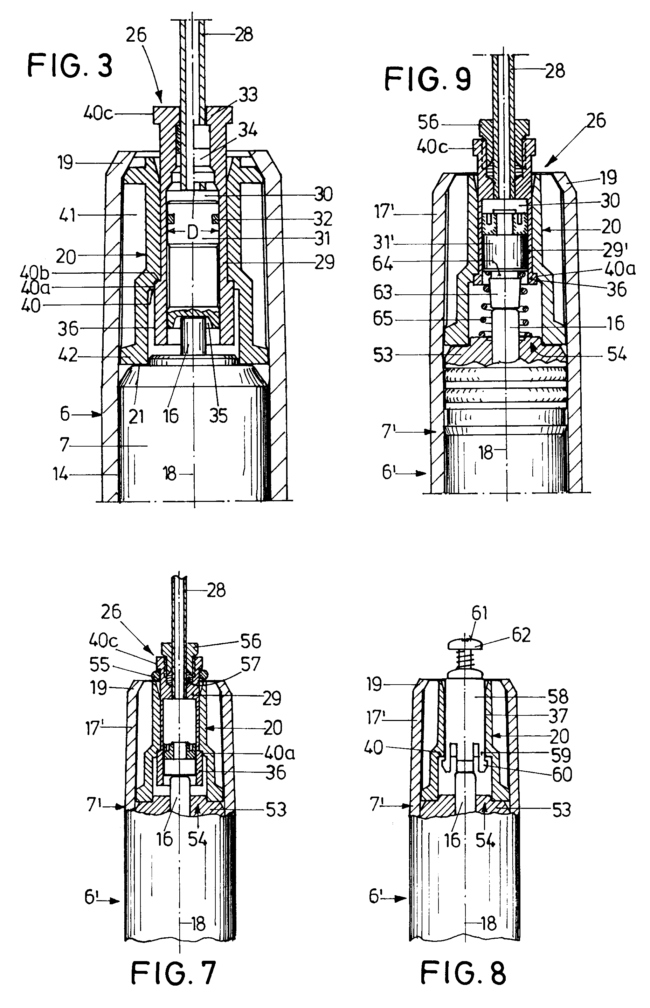

Anstelle des zusätzlichen Tragrohres 14 kann selbstverständlich auch das Gehäuse 7' der Gasfeder 6' unmittelbar entsprechend verlängert sein, also mit einem über den Betätigungsstift 16 hinausragenden Befestigungsabschnitt 17' versehen sein, wie es für die Gasfeder selber aus der DE-OS 19 58 874 bekannt ist. Eine solche Ausgestaltung ergibt sich aus Fig. 7. Hierbei stützt sich ein Ventilkörper 53 des oben bereits erwähnten Ventils 54 der Gasfeder 6' über die Distanz-Hülse 20 gegen den Rand 19 ab. Der Betätigungsstift 16 ist Teil des Ventils 54 und im Ventilkörper 53 in Richtung der Achse 18 verschiebbar. Die Ausgestaltung des Ventils selber und der übrigen Gasfeder ist - wie oben bereits ausgeführt wurde - allgemein bekannt.

Aus Fig. 7 ist auch eine Maßnahme ersichtlich, wie das Gehäuse 29 der Auslöse-Einrichtung 26 in Richtung der Achse 18 spielfrei in der Distanz-Hülse 20 angeordnet werden kann. Hierzu ist zwischen dem Sechskant-Profil 40c, das die Funktion eines vorstehenden Randes hat, und der Distanz-Hülse 20 ein Kleines Federungselement 55, beispielsweise ein Gummiring od.dgl., angeordnet, der das Gehäuse 29 aus der Distanz-Hülse 20 zu drücken sucht, so daß dessen Außen-Sechskant-Abschnitt 36 in den Ausnehmungen 40a in der Distanz-Hülse 20 gehalten wird.

Fig. 7 zeigt auch eine gegenüber dem obigen Ausführungsbeispiel abgewandelte Art der Befestigung des Hydraulik-Schlauches 28 im Gehäuse 29 der Auslöse-Einrichtung 26. Hier ist der Schlauch 28 mittels einer diesen umgebenden hohlen Spannschraube 56 und eines von dieser zusammengedrückten Spannrings 57 im Gehäuse 29 gehalten. Diese Art der Befestigung des Schlauches 28 am Gehäuse 29 und insbesondere auch die axial spielfreie Halterung des Gehäuses 29 in der Distanz-Hülse 20 mittels des Federelements 55 kann selbstverständlich auch bei dem Ausführungsbeispiel nach den Fig. 2 bis 6 in gleicher Weise angewendet werden.

In Fig. 8 ist das obere Ende des Gehäuses 7' der Gasfeder 6' mit dessen Befestigungsabschnitt 17' einschließlich einer identischen Distanz-Hülse 20 dargestellt. Anstelle einer Auslöse-Einrichtung 26 ist ein Schiebekörper 58 vorgesehen, der im wesentlichen in dem Innen-Mehrkant-Bereich 37 der Distanz-Hülse 20 in Richtung der Achse 18 verschiebbar angeordnet ist. Er liegt gegen den Betätigungsstift 16 der Gasfeder 6' an. Der Schiebekörper 58 ist mit sich zum Gehäuse 7' der Gasfeder 6' hin erstreckenden Haltefingern 59 versehen, die mit radial nach außen vorragenden widerhakenartigen Vorsprüngen 60 unter die Anschlagfläche 40 greifen, wodurch der Schiebekörper 58 gegen ein unbeabsichtigtes Herausfallen oder Herausziehen aus der Distanz-Hülse 20 unter gleichzeitig weitgehend spielfreier Anlage gegen den Betätigungsstift 16 gesichert ist. Zum Einschieben des Schiebekörpers 58 können die Vorsprünge 60 in dem Innen-Sechskant-Bereich 37 nach unten gleiten. Die Betätigung erfolgt mittels eines in üblicher Weise am Stuhl 1 gelagerten schwenkbaren Betätigungshebels, der gegen eine axial verstellbare Außenfläche 61 des Schiebekörpers 58 zur Anlage kommt. Diese Außenfläche 61 wird durch den Kopf einer Schraube 62 gebildet, die in den Schiebekörper 58 hineingeschraubt ist. Durch entsprechendes Verdrehen der Schraube 62 kann die Lage der Außenfläche 61 verändert werden, so daß eine spielfreie Anlage an dem erwähnten, nicht dargestellten Bedienungshebel gegeben ist. Diese Ausgestaltung der Distanz-Hülse 20 mit dem Schiebekörper 58 ist bekannt und im Prinzip in der EP 0 133 523 B2 (entsprechend JP-GM 1 818 870) dargestellt und beschrieben. Die Beschreibung dieser Ausgestaltung dient dem Zweck darzulegen, daß die Auslöse-Einrichtung 26 aufgrund ihrer Ausgestaltung wahlweise anstelle eines Schiebekörpers 58 für eine rein manuelle Auslösung mittels eines am Stuhl 1 gelagerten Bedienungshebels eingesetzt werden kann, ohne daß die Gasfeder 6' mit der Distanz-Hülse 20 geändert werden muß. Dies gilt in gleicher Weise für die Gasfeder 6 mit Tragrohr 14.

Das Ausführungsbeispiel nach Fig. 9 entspricht weitgehend dem nach Fig. 7, weshalb insoweit dort die gleichen Bezugsziffern verwendet worden sind und auf die Beschreibung der Fig. 7 verwiesen werden kann. Bei dem Ausführungsbeispiel nach Fig. 9 ist das Gehäuse 29' lediglich mit einem sehr kurzen Außen-Sechskant-Abschnitt 36' versehen, wodurch das Gehäuse 29' insgesamt kürzer wird. Der Auslöse-Kolben 31' ist an seinem dem Betätigungsstift 16 der Gasfeder 6' zugewandten Ende mit einem Vorsprung 63 in Form eines Zapfens versehen, der gegen den Betätigungsstift 16 anliegt. Am Übergang vom Kolben 31' zum Vorsprung 63 ist eine Ringnut 64 ausgebildet, auf der eine Kegel-Feder 65 gehalten ist, die sich gegen den Ventilkörper 53 des Ventils 54 abstützt. Die Kegel-Feder 65 ist in montiertem Zustand eine vorgespannte Druckfeder. Diese Feder 65 hat im Prinzip die gleiche Funktion wie das Federungselement 55 bei der Ausführungsform nach Fig. 7, wobei allerdings die Feder 65 den Vorteil hat, daß sie über den gesamten möglichen Weg des Kolbens 31' und des Betätigungsstiftes 16 wirksam ist. Dies hat zur Folge, daß über den vollen Weg des Kolbens 31' und des Betätigungsstiftes 16 die vorgespannte Feder 65 in Ausschubrichtung des Betätigungsstiftes 16 wirkt. Sie unterstützt also dessen Ausfahrbewegung und trägt dazu bei, eventuell in in der Auslöse-Einrichtung 26 oder der Betätigungs-Einrichtung 27 vorhandene Reibungskräfte zu überwinden, so daß das Ventil 54 beim Loslassen der Betätigungs-Einrichtung 27 zuverlässig geschlossen wird.

## Patentansprüche

1. Längenverstellbare Gasfeder (6, 6'), mit einem Gehäuse (7, 7'), mit einer aus dem Gehäuse (7, 7') herausgeführten Kolbenstange (15), mit einem zur Längenverstellung in Richtung zum Gehäuse (7) hin verschiebbaren Betätigungsstift (16) eines Ventils (54) , mit einer hydraulischen Verstell-Einrichtung (25) zum Verschieben des Betätigungsstiftes (16) zum Gehäuse (7) hin, die eine in eine der Gasfeder (6, 6') zugeordnete Distanz-Hülse (20) einschiebbare Auslöse-Einrichtung (26) und eine über einen Hydraulik- Schlauch (28) hiermit verbundene Betätigungs-Einrichtung (27) aufweist, wobei ein am Betätigungsstift (16) anliegender in einem Gehäuse (29, 29') verschiebbarer Auslöse-Kolben (31, 31') der Auslöse-Einrichtung (26) hydraulisch mit einem manuell verschiebbaren Betätigungs-Kolben (45) der Betätigungs-Einrichtung (27) gekoppelt ist, wobei die Verstell-Einrichtung (25) als eigenständige Baugruppe ausgebildet ist und wobei die Auslöse-Einrichtung (26) mit der Gasfeder (6, 6') lösbar verbunden ist, dadurch gekennzeichnet, daß die Distanz-Hülse (20) eine dem Gehäuse (7, 7') der Gasfeder (6, 6') benachbarte Ausnehmung (39) größerer Weite und einen sich hieran anschließenden Innen-Mehrkant-Bereich (37) kleinerer Weite aufweist, daß die Auslöse-Einrichtung (26) mit ihrem Gehäuse (29, 29') im wesentlichen in dem Innen-Mehrkant-Bereich (37) angeordnet ist, daß das Gehäuse (29, 29') der Auslöse-Einrichtung (26) an einem dem Betätigungsstift (16) der Gasfeder (6, 6') zugewandten Ende mit einem dem Innen-Mehrkant-Bereich (37) im Querschnitt angepaßten Außen-Mehrkant-Bereich (36, 36') versehen ist und daß in einer am Übergang von dem Innen-Mehrkant-Bereich (37) zur Ausnehmung (39) größerer Weite ausgebildeten Anschlagfläche (40) in Umfangsrichtung gegenüber dem Innen-Mehrkant-Bereich (37) versetzt angeordnete Ausnehmungen (40a) zur mindestens teilweisen Aufnahme des Außen-Mehrkant-Abschnittes (36, 36') ausgebildet sind.

2. Gasfeder nach Anspruch 1, dadurch gekennzeichnet, daß der Innen-Mehrkant-Bereich (37) und der Außen-Mehrkant-Abschnitt (36, 36') jeweils ein gleichmäßiges Mehrkantprofil aufweisen.

3. Gasfeder nach Anspruch 2, dadurch gekennzeichnet, daß die Ausnehmungen (40a) um einen Winkel (a) gegenüber dem Innen-Mehrkant-Bereich (37) versetzt sind, der dem halben Winkel (b) der Mehrkantprofile entspricht.

4. Gasfeder nach Anspruch 2, dadurch gekennzeichnet, daß der Innen-Mehrkant-Bereich als Innen-Sechskant-Bereich (37) und der Außen-Mehrkant-Abschnitt als Außen-Sechskant-Abschnitt (36, 36') ausgebildet sind.

5. Gasfeder nach einem der Ansprüche 1 bis 4, dadurch gekennzeichnet, daß das Gehäuse (29, 29') der Auslöse-Einrichtung (26) in der Distanz-Hülse (20) radial im wesentlichen spielfrei angeordnet ist.

6. Gasfeder nach Anspruch 5, dadurch gekennzeichnet, daß das Gehäuse (29, 29') der Auslöse-Einrichtung (26) einen zylindrischen Abschnitt (38) aufweist, der im Innen-Mehrkant-Bereich (37) radial im wesentlichen spielfrei anliegt.

7. Gasfeder nach einem der Ansprüche 1 bis 6, dadurch gekennzeichnet, daß das Gehäuse (29, 29') der Auslöse-Einrichtung (26) in der Distanz-Hülse (20) axial im wesentlichen spielfrei angeordnet ist.

8. Gasfeder nach Anspruch 7, dadurch gekennzeichnet, daß bei nicht betätigter Verstell-Einrichtung (25) einerseits der Außen-Mehrkant-Abschnitt (36, 36') gegen den Grund (40b) der Ausnehmungen (40a) und andererseits der Auslöse-Kolben (31, 31') gegen den Betätigungsstift (16) der Gasfeder (6) anliegt.

9. Gasfeder nach einem der Ansprüche 1 bis 8, dadurch gekennzeichnet, daß die Ausnehmung (39) größerer Weite in der Distanz-Hülse (20) zur Aufnahme des Außen-Mehrkant-Abschnittes (36, 36') ausgebildet ist.

10. Gasfeder nach einem der Ansprüche 1 bis 9, dadurch gekennzeichnet, daß ein das Gehäuse (29, 29') der Auslöse-Einrichtung (26) von dem Betätigungsstift (16) der Gasfeder (6, 6') wegdrückendes Federungselement (55, 65) vorgesehen ist.

11. Gasfeder nach Anspruch 10, dadurch gekennzeichnet, daß das Federungselement als vorgespannte Druckfeder (65) zwischen dem Auslöse-Kolben (31') und dem Ventil (54) angeordnet ist.
